# EUROPÄISCHE PATENTANMELDUNG

(11) **EP 1 705 420 A1**
(43) Veröffentlichungstag der Anmeldung: **27.09.2006**
(21) Anmeldenummer: 06005786.6
(22) Anmeldetag: 21.03.2006
(51) Int. Cl.: F17D 1/20, F16L 55/04, F15D 1/00

(54) **Vorrichtung zur Druckstosssicherung in einem Rohrleitungssystem**

(30) Priorität: 24.03.2005 DE 102005013791
(71) Anmelder: Zweckverband Landeswasserversorgung, 70182 Stuttgart (DE)
(72) Erfinder: Haakh, Frieder, 71032 Böblingen (DE)
(74) Vertreter: Strass, Jürgen

(57) **Zusammenfassung**

Eine Vorrichtung zur Druckstoßsicherung in einem Rohrleitungssystem (10) mit einer Pumpe (12) und einem nach der Pumpe (12) angeordneten Druckbehälter (42) ist dadurch gekennzeichnet, daß in den Druckbehälter (42) eine Wirbelkammerdiode integriert ist, wobei der Boden der Wirbelkammerdiode durch den Boden des Druckbehälters gebildet ist, eine Venturi-Düse in der tangentialen Leitung (54) der Wirbelkammerdiode angeordnet ist, und im Druckbehälter radiale Wandabschnitte (62) vorhanden sind.

## Beschreibung

Die Erfindung betrifft eine Vorrichtung zur Druckstoßsicherung in einem Rohrleitungssystem mit einer Pumpe und einem Druckbehälter.

Um in einem Rohrleitungssystem mit einer Pumpe unerwünschte Druckpendelungen und allgemein Druckstöße zu dämpfen und sicher zu beherrschen, ist es bekannt, insbesondere nach der Pumpe einen Druckbehälter mit einem Gaspolster einzusetzen. In der Veröffentlichung "Wirbelkammerdioden als Drosselorgan im Rohrleitungssystem" von Dr.-Ing. Frieder Haakh, gwf Wasser/Abwasser, Heft Nr. 9/2003, ist ein später noch genauer beschriebenes Rohrleitungssystem mit einer Vorrichtung zur Druckstoßsicherung der eingangs genannten Art gezeigt. Eine solche Vorrichtung ist in der Lage, die beispielsweise nach einem Pumpenausfall auftretenden Wassermassenschwingungen rasch zu dämpfen und die maximalen Drücke zu beschränken. Hierzu wird beim Zurückschwingen der Wassermassen in Richtung Pumpe das Wasser mit Hilfe einer Wirbelkammerdiode angedrosselt, bevor es in einem Druckbehälter mit Gaspolster aufgefangen wird.

Aufgabe der Erfindung ist es, eine effiziente und zuverlässige Vorrichtung zur Druckstoßsicherung in einem Rohrleitungssystem zu schaffen, die kostengünstiger realisierbar ist.

Zur Lösung dieser Aufgabe wird vorgeschlagen, in den Druckbehälter eine Wirbelkammerdiode zu integrieren. Die Erfindung beruht auf der Erkenntnis, daß die bewährten Eigenschaften einer Wirbelkammerdiode in einem Rohrleitungssystem nicht zwingend eine separate Baueinheit erfordern. Die Integration der Wirbelkammerdiode in den Druckbehälter ermöglicht es, bestimmte Teile des Druckbehälters gleichzeitig als Bestandteile der Wirbelkammerdiode zu nutzen. Auf diese Weise können verschiedene Bauteile eingespart werden. Auch der Wartungsaufwand verringert sich. Neben der wirtschaftlicheren Bauweise zeigt die erfindungsgemäße Vorrichtung aber auch die bekannten funktionellen Vorteile. Nach einem Ausfall oder einem Notaus der Pumpe lassen sich Druckstöße sicher beherrschen, die maximalen Druckanstiege in den Rohrleitungen werden wirkungsvoll begrenzt, und die Nachschwingzeit wird deutlich reduziert. Dies erlaubt zum einen eine schnelle Wiederinbetriebnahme der Pumpe und wirkt sich zum anderen günstig auf die Lebensdauer des gesamten Rohrleitungssystems aus.

Vorteilhafte und zweckmäßige Ausgestaltungen der erfindungsgemäßen Vorrichtung zur Druckstoßsicherung sind in den Unteransprüchen angegeben.

Die Erfindung wird nachfolgend unter Bezugnahme auf die beigefügten Zeichnungen näher beschrieben. In den Zeichnungen zeigen:
Figur 1 ein Rohrleitungssystem mit einer Vorrichtung zur Druckstoßsicherung nach dem Stand der Technik;
Figuren 2a, 2b eine Wirbelkammerdiode bei unterschiedlichen Strömungsrichtungen;
Figur 3 eine Schnittansicht einer erfindungsgemäßen Vorrichtung zur Druckstoßsicherung;
Figur 4 eine transparente perspektivische Ansicht der erfindungsgemäßen Vorrichtung; und
Figur 5 eine Draufsicht auf den Einlaßbereich der erfindungsgemäßen Vorrichtung.

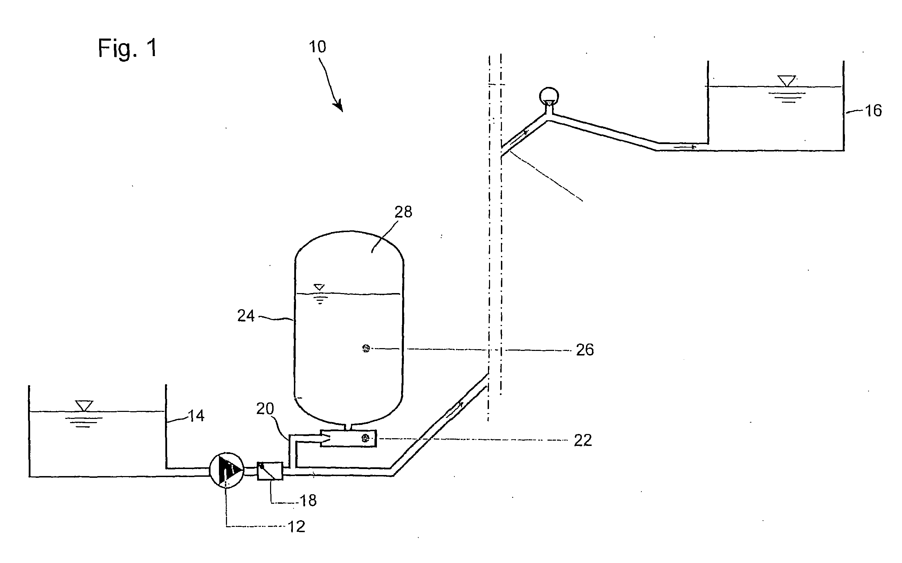

In Figur 1 ist ein Rohrleitungssystem 10 mit einer Pumpe 12 und einer Vorrichtung zur Druckstoßsicherung nach dem Stand der Technik dargestellt. Mit Hilfe der Pumpe 12 wird Wasser aus einem ersten Reservoir 14 über Rohrleitungen in ein erhöhtes zweites Reservoir 16 befördert. Nach der Pumpe 12 (in Pumprichtung) ist eine Rückschlagklappe 18 vorgesehen. Nach der Rückschlagklappe 18 zweigt eine Rohrleitung 20 ab, die in eine Wirbelkammerdiode 22 mündet. Über der Wirbelkammerdiode 22 ist ein Druckbehälter 24 mit einem Wasservorrat 26 und einem darüberliegenden Gaspolster 28 angeordnet.

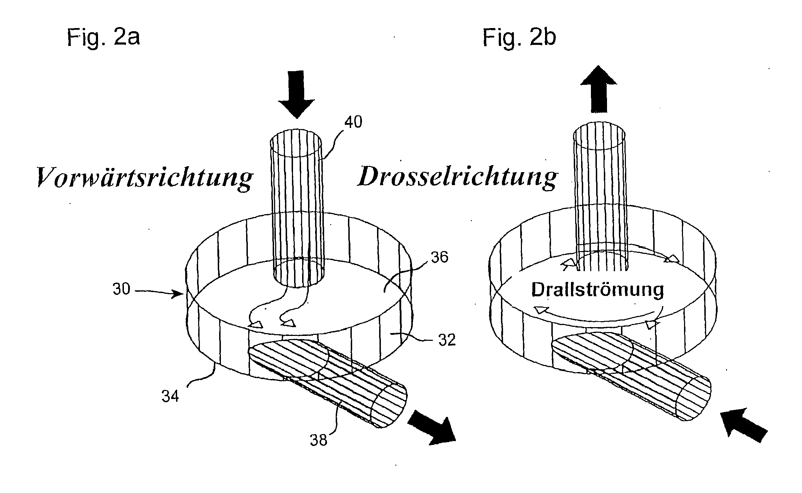

Bei einem Pumpenausfall treten Druckstöße auf, die in Wassermassenschwingungen im Rohrleitungssystem 10 resultieren. Die Rückschlagklappe 18 sorgt dafür, daß das entgegen der Pumprichtung zurückströmende Wasser von der Pumpe 12 ferngehalten und über die abzweigende Rohrleitung 20 in den Druckbehälter 24 befördert wird. Um in einem solchen Fall die maximalen Drücke im Rohrleitungssystem 10 zu beschränken und die Schwingung möglichst effektiv zu dämpfen, ist es vorteilhaft, wenn unmittelbar nach dem Pumpenausfall Wasser aus dem Druckbehälter 24 möglichst ungehindert in das Rohrleitungssystem 10 nachströmen kann. Anschließend sollte jeweils beim Zurückschwingen der Wassermassen der Anteil, der in den Druckbehälter 24 geleitet wird, vorher angedrosselt werden. Zu diesem Zweck ist unterhalb des Druckbehälters 24 die Wirbelkammerdiode 22 vorgesehen, deren Funktionsweise anhand der Figuren 2a und 2b kurz erläutert wird.

Die Wirbelkammerdiode 22 hat ein zylindrisches Gehäuse 30, das eine Wirbelkammer umschließt. Das Gehäuse 30 weist eine umlaufende Seitenwand 32, einen Boden 34 und einen Deckel 36 auf. Eine erste Leitung 38 mündet tangential an der Seitenwand 32 in die Wirbelkammer. Eine vertikale zweite Leitung 40 mündet an der Mitte des Deckels 36 in die Wirbelkammer. Im Beispiel des in Figur 1 gezeigten Rohrleitungssystems 10 entspricht die erste Leitung 38 der Rohrleitung 20, die zweite Leitung 40 mündet in den Boden des Druckbehälters 24.

Die Wirbelkammerdiode 22 ermöglicht einerseits einen weitgehend ungehinderten Wasserabfluß aus dem Druckbehälter 24 in das Rohrleitungssystem 10 (Figur 2a). Andererseits wird über die Leitung 20 bzw. 38 zurückströmendes Wasser zunächst in eine Drallströmung versetzt, bevor es nach oben in den Druckbehälter 24 gelangt (Figur 2b). Die so bewirkte Drosselung stellt die Hauptfunktion der Wirbelkammerdiode 22 dar. Eine Wirbelkammerdiode hat allgemein den Vorteil, daß sie ohne bewegliche Teile auskommt, da die Drosselung auf rein hydrodynamischen Effekten beruht.

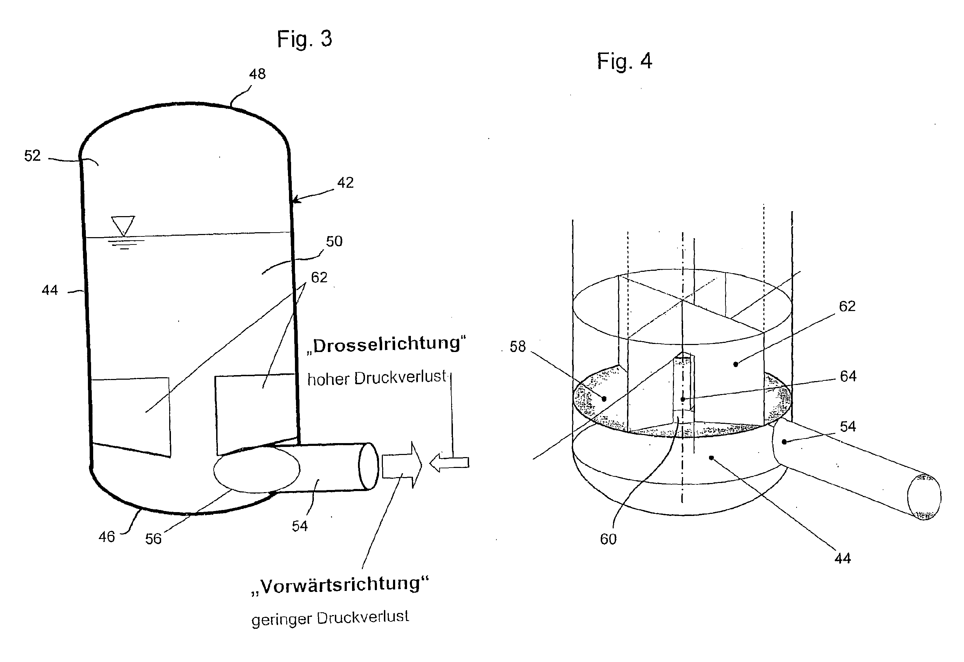

In den Figuren 3 und 4 ist eine Vorrichtung zur Druckstoßsicherung gemäß der Erfindung dargestellt, die in einem Rohrleitungssystem 10, wie es in Figur 1 gezeigt ist, eingesetzt werden kann. Die Vorrichtung umfaßt einen Druckbehälter 42 mit einer Seitenwand 44, einem Boden 46 und einem Deckel 48. Der Druckbehälter 42 beinhaltet wie bei der zuvor beschriebenen Vorrichtung nach dem Stand der Technik einen Wasservorrat 50 und ein darüberliegendes Gaspolster 52. Die erfindungsgemäße Vorrichtung kommt jedoch aufgrund der besonderen Gestaltung des unteren Bereichs des Druckbehälters 42 ohne separate Wirbelkammerdiode aus.

Anstelle einer in den Boden 46 mündenden vertikalen Zuleitung steht der Druckbehälter 42 über eine tangentiale Leitung 54 am unteren Bereich der Seitenwand 44 mit der Rohrleitung 20 des Rohrleitungssystems 10 in Verbindung. Oberhalb der Einmündung 56 der Leitung 54 ist ein Zwischendeckel 58 angeordnet, der eine mittige Öffnung 60 aufweist. Der Zwischendeckel 58 kann wie die Mantelfläche eines Kegelstumpfs oder ein Teil der Oberfläche eines Rotationsellipsoids geformt sein.

Auf dem Zwischendeckel 58 sind ferner zwei radiale Wandabschnitte 62 aus Blech vorgesehen, die sich jeweils zwischen zwei gegenüberliegenden Stellen der Seitenwand 44 des Druckbehälters 42 erstrecken und kreuzförmig angeordnet sind. Es können auch mehr als zwei Wandabschnitte 62 vorgesehen werden, die dann sternförmig angeordnet wären. Im unteren Bereich weisen die Wandabschnitte Ausschnitte 64 auf, die an die Öffnung 60 des Zwischendeckels 58 angepaßt sind.

Mit dieser Konstruktion kann auf eine separate Wirbelkammerdiode verzichtet werden, da der untere Bereich des Druckbehälters 42 deren Funktion übernimmt, d.h. die Wirbelkammerdiode ist bereits im Druckbehälter 42 enthalten. Das Gehäuse der in den Druckbehälter 42 integrierten Wirbelkammerdiode ist durch den Boden 46 des Druckbehälters 42, den Zwischendeckel 58 und den dazwischenliegenden Teil der Seitenwand 44 des Druckbehälters 42 gebildet. Die tangentiale Leitung 54 entspricht der Rohrleitung 20 des Rohrleitungssystems 10 der Figur 1 oder ist mit dieser verbunden.

Die in den Druckbehälter 42 integrierte Wirbelkammerdiode erfüllt die gleichen Aufgaben wie die separate Wirbelkammerdiode 22 bei der Vorrichtung nach dem Stand der Technik, wobei die Ausschnitte 64 der Wandabschnitte 62 beim Zurückschwingen des Wassers die Aufnahme des Wirbelkerns ermöglichen. Die Wandabschnitte 62 selbst stellen eine Drallbremse dar, die verhindert, daß der Wasservorrat 50 oberhalb des Zwischendeckels 58 in eine Drallströmung versetzt wird.

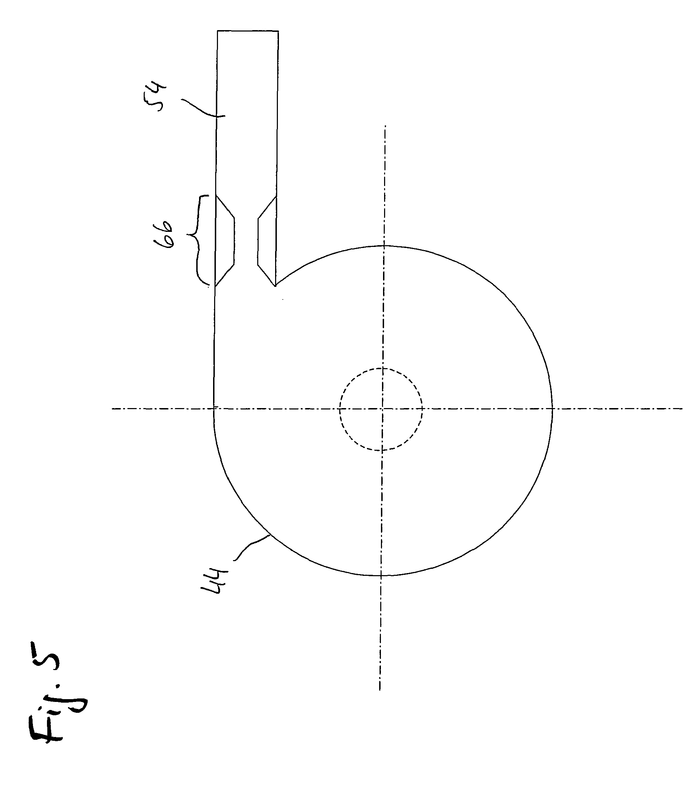

In Figur 5 ist eine besonders vorteilhafte Geometrie der tangentialen Leitung 54 gezeigt. Ein Abschnitt 66 der Leitung 54 ist nach Art einer Venturi-Düse gestaltet. Dadurch wird ein schnelleres Einsetzen der gewünschten Drosselwirkung erzielt. Dem liegt die Erkenntnis zugrunde, daß sich die Zeitspanne, bis zu der sich die Drallströmung ausbildet, aus dem zeitlichen Integral der zugeführten kinetischen Energie ergibt. Durch die der Wirbelkammerdiode vorgeschaltete Venturi-Düse wird die Strömung gemäß dem Bernoulli-Gesetz vor dem Eintritt in die Wirbelkammerdiode beschleunigt. Dies entspricht einer Erhöhung der kinetischen Energie und damit einer Verkürzung der Zeitspanne bis zum Einsetzen der Drosselwirkung.

## Patentansprüche

1. Vorrichtung zur Druckstoßsicherung in einem Rohrleitungssystem (10) mit einer Pumpe (12) und einem nach der Pumpe (12) angeordneten Druckbehälter (42), **dadurch gekennzeichnet, daß** in den Druckbehälter (42) eine Wirbelkammerdiode integriert ist.

2. Vorrichtung nach Anspruch 1, **dadurch gekennzeichnet, daß** der Boden der Wirbelkammerdiode durch den Boden (46) des Druckbehälters (42) gebildet ist.

3. Vorrichtung nach Anspruch 1 oder 2, **dadurch gekennzeichnet, daß** die Seitenwand der Wirbelkammerdiode durch einen Teil der Seitenwand (44) des Druckbehälters (42) gebildet ist.

4. Vorrichtung nach einem der vorhergehenden Ansprüche, **dadurch gekennzeichnet, daß** der Druckbehälter (42) über eine Rohrleitung (54) mit dem Rohrleitungssystem (10) verbunden ist, wobei die Rohrleitung (54) tangential an der Seitenwand (44) des Druckbehälters (42) in einen unteren Bereich des Druckbehälters (42) mündet.

5. Vorrichtung nach Anspruch 4, **dadurch gekennzeichnet, daß** in der tangentialen Leitung (54) eine Venturi-Düse vorgesehen ist.

6. Vorrichtung nach Anspruch 4 oder 5, **dadurch gekennzeichnet, daß** im Druckbehälter (42) oberhalb der Einmündung (56) der Rohrleitung (54) ein Zwischendeckel (58) mit einer Öffnung (60) angeordnet ist.

7. Vorrichtung nach einem der vorhergehenden Ansprüche, **dadurch gekennzeichnet, daß** im Druckbehälter (42) radiale Wandabschnitte (62) vorgesehen sind.

8. Vorrichtung nach Anspruch 7, **dadurch gekennzeichnet, daß** die Wandabschnitte (62) kreuz- oder sternförmig angeordnet sind.

9. Vorrichtung nach Anspruch 6 und einen der Ansprüche 7 oder 8, **dadurch gekennzeichnet, daß** die Wandabschnitte (62) an die Öffnung (60) des Zwischendeckels (58) angepaßte Ausschnitte (64) aufweisen.
